# EUROPEAN PATENT SPECIFICATION

(11) **EP 1 722 144 B1**
(45) Date of publication and mention of the grant of the patent: **18.02.2009**
(21) Application number: 05076088.3
(22) Date of filing: 10.05.2005
(51) Int. Cl.: F16L 1/20, B66D 3/04

(54) **Marine pipe laying system method and hoisting device**
System zum Verlegen von Unterwasserrohren und Hebevorrichtung
Système pour la pose de tubes sous-marins et dispositif de levage

(43) Date of publication of application: 15.11.2006
(73) Proprietor: Itrec B.V., 3115 HH Schiedam (NL)
(72) Inventor: Roodenburg, Joop, 2612 HA Delft (NL); van den Assum, Leopold Antonius Maria Crispinus, 3119 ZD Schiedam (NL); Vehmeijer, Terence Willem August, 2561 SZ Den Haag (NL)
(74) Representative: Houben, Christiaan Hein Willem Frans

(56) References cited:
- DE-A1- 3 736 287
- US-A- 3 863 898
- US-B1- 6 595 494

## Description

The present invention relates to a marine pipe laying system for laying of an offshore pipeline, the system comprising:
a) a main supporting structure;
b) a pipe connecting station, wherein a pipe section is connected to an uppermost end of a previously launched pipeline;
c) a static clamp adapted for releasably securing the uppermost end of the previously launched pipeline, wherein the static clamp is adapted to support the weight of the previously launched pipeline;
d) a hoisting device comprising:
   - a tower with a tower top side provided with cable pulleys,
   - a traveling block which is displaceably attached to the tower and which is provided with cable pulleys and a traveling clamp for holding a pipe section to be connected to the pipeline as well as for lowering the pipeline after the pipe section is connected to the pipeline,
   - hoisting means comprising a hoisting cable and a winch, the hoisting cable being guided over the cable pulleys on both the tower top side and the traveling block,
   wherein the traveling block is moveable with respect to the tower by means of the hoisting means.

Such a system is known e.g. from US 5,421,675. The traveling block has to be able to support the pipeline during launch of the pipeline, which in practice means that the traveling block has to be able to support a load of 1000 tons or more. To this end the traveling block and the tower top side have to be provided with enough cable pulleys to guide the hoisting cable in order to create enough cable parts extending between the traveling block and the tower top side, the load being distributed over the parts. However, the more cable parts extend between the traveling block and the tower top, the slower the block can be moved along the tower.

When laying a pipeline the application of a hoisting system with enough cable parts is necessary to support the load of the pipeline, but it has the drawback that when the load is released from the traveling block, the traveling block can only be moved upwards relatively slowly, which limits the length of pipe to be laid in one day.

Prior art US 3,863,898 discloses a pipe laying system according to the preamble of claim 1.

The object of the invention is to provide an improved pipe laying system.

This object is achieved by a pipe laying system according to the characterising portion of claim 1.

With this pipe laying system a pipe laying method according claim 6 can be performed.

With the described system and method the first block with the traveling clamp and the second block can be moved upwards separately when the launched pipeline is supported by the static clamp. Since the second block remains locked with respect to the tower, the moving portion of the traveling block, i.e. the first block has less cable parts extending between it and the top side of the tower. This leads to a higher hoisting speed of the first block with respect to the case where the whole traveling block would be hoisted up as a unit. This results in that the traveling clamp is quicker available at the top side of the tower in order to grip a new pipe section to be connected to the pipeline hanging off the static clamp. The first block positions the lowermost end of the pipe section at the pipe connecting station, after which it is gripped by line up means that line up the pipe section with the uppermost end of the pipeline and the traveling clamp can be released. Simultaneous to the connecting operation the second block is unlocked from the tower and hoisted up. By the time the pipe section is connected to the pipeline, the second block is at the uppermost position and coupled to the first block, whereby the traveling block as a unit is ready for gripping the uppermost end of the pipeline and lowering it.

With the system according to the invention the first block with the traveling clamp can be available at the uppermost position within 17% of the time necessary for a non splittable traveling block to be available at the uppermost position. With the method and system according to the present invention valuable time is saved with respect to pipe laying methods according to the prior art which results in a significant decrease of costs.

Another aspect of the invention relates to a hoisting device according to claim 9.

With such a hoisting device according to claim 9 a method comprising an operation cycle can be performed in which:
a first load is gripped by the traveling clamp with the traveling block consisting of the coupled first block and second block in an uppermost position on the tower;
the first load is lowered by lowering the coupled together first block and second block by means of the hoisting means to a lowermost position on the tower where the traveling clamp is releasde from the first load which is handed over to a load handling device;
wherein the second block is locked to the tower by means of the locking means, the first block alone is hoisted from the lowermost position to the uppermost position by means of the hoisting means, after which the first block is used for an intermediate operation after which the second block is unlocked from the tower and hoisted to the uppermost position where it is coupled to the first block.

The hoisting device is thus well adapted for performing a operation cycle wherein in an intermediate operation step only the first block has to be available at the top side of the tower for taking part in an intermediate operation which does not require the full load supporting capacity. The first block can thus be used to deliver an intermediate load to a load handling device. When the first block is released from the intermediate load and the intermediate load is being handled by the load handling device, the second block can return to the uppermost position. When the time period necessary to handle the intermediate load does not exceed the time necessary to hoist up the second block, the cycle time can be significantly reduced.

Such a hoisting device according to claim 9 can further advantageously be used in a method for connecting a first object and a second object at a connecting station. The method comprises the following steps:
i) holding the first object and supporting it with the traveling clamp with the traveling block in an uppermost position on the tower,
ii) lowering the first object by lowering the coupled first block and second block by means of the hoisting means to a lowermost position on the tower,
iii) gripping the first object with gripping means at the connecting station,
iv) releasing the traveling clamp from the first object,
v) locking the second block to the tower by means of the locking means,
vi) hoisting the first block from the lowermost position to the uppermost position by means of the hoisting means,
vii) gripping with the traveling clamp the second object,
viii) lowering the first block with the second object by means of the hoisting means such that the second object is delivered to the connecting station and gripped by its gripping means,
ix) releasing the traveling clamp from the second object,
x) unlock the second block from the tower,
xi) connecting the second object to the first object,
xii) hoist the second block to the uppermost position while connecting the second object to the first object,
xiii) couple the first block and second block,
xiv) grip the connected first and second object with the traveling clamp,
xv) release the connected first and second object from the connecting station, while holding them with the traveling clamp with the traveling block in an uppermost position on the tower.

The invention will be described in more detail in the following description of a preferred embodiment with reference to the accompanying drawing. In the drawing
Fig. 1 shows a schematic side elevational view of a pipe laying system, and
Figs. 2-7 show a schematic front view of a pipe laying system illustrating the steps of a pipe laying method.

The embodied system relates to a vertical or near vertical pipeline laying technique, such as the J-lay technique, for a pipeline launched from a vessel in an essentially vertical orientation. The system provides an improved pipe laying system for vertical or near vertical marine pipelaying, particular in deep water.

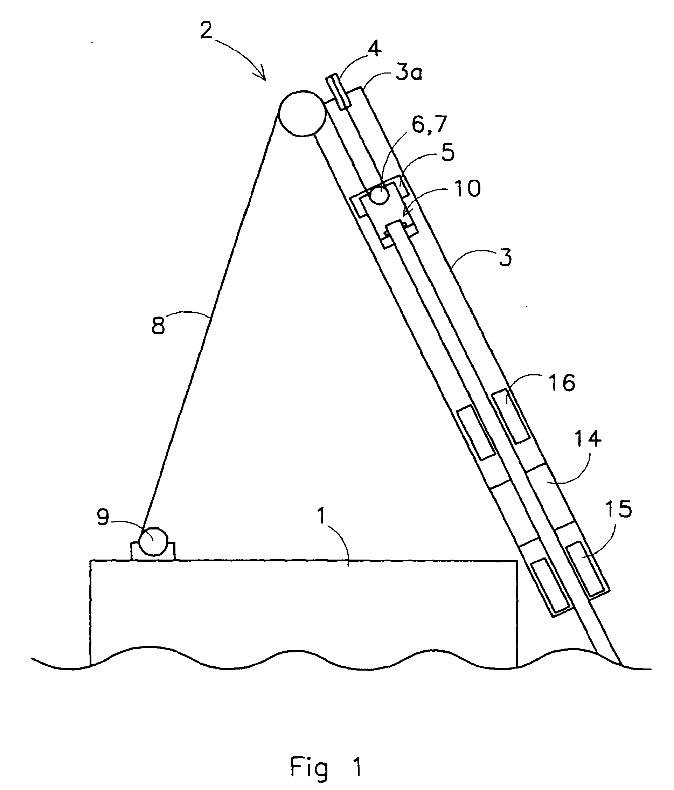

The methods illustrated with reference to the Figs. 1-7 relate to an efficient method for the vertical or near vertical laying of offshore pipelines.

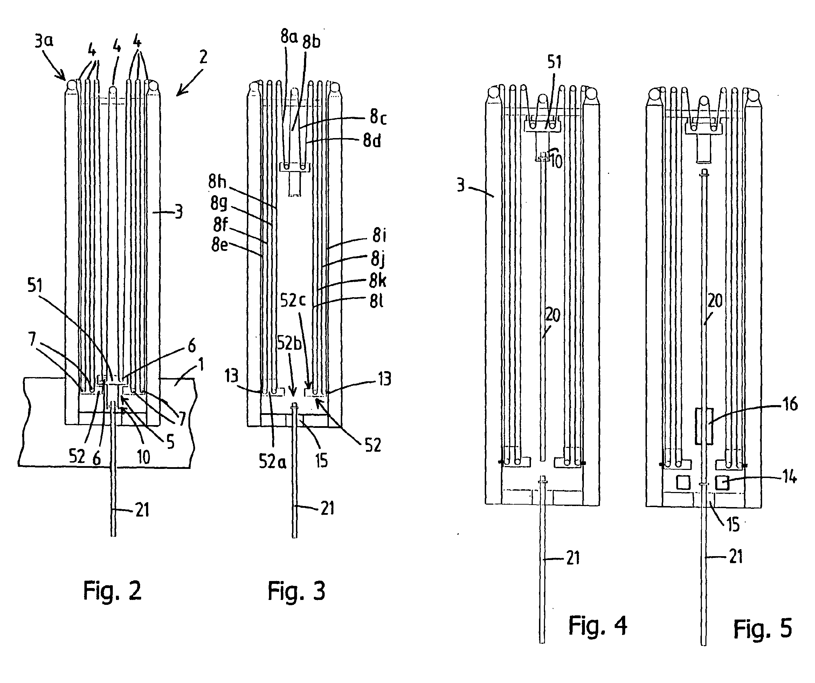

The pipe laying system provides a vessel which acts as a main supporting structure. In Fig. 1 and Fig. 2 a part of this vessel is shown and indicated by reference numeral 1. In the Figs. 2-7 the vessel 1 is omitted for the reasons of clarity of the drawing.

On the vessel 1 is provided a hoisting device indicated by reference numeral 2. The hoisting device 2 comprises a tower 3 with a tower top side 3a. On the tower top side 3a are provided cable pulleys 4.

The hoisting device 2 further comprises a traveling block 5 which is displaceably attached to the tower 3. The traveling block 5 is provided with cable pulleys 6 and 7.

Also the hoisting device has hoisting means comprising a hoisting cable 8 and a winch 9. The hoisting cable 8 is guided over the cable pulleys 4 at the top side 3a of the tower 3 and the cable pulleys 6, 7 on the traveling block 5. By winding up and unwinding the cable 8 on and off the winch 9, the traveling block 5 is moveable with respect to the tower 3.

As can be seen best in Fig. 2 the traveling block 5 comprises a first block 51 and a second block 52. In the particular embodiment that is shown in the figures, the first block 51 is provided with two cable pulleys 6. The second block 52 is provided with four cable pulleys 7.

The first block 51 is provided with a traveling clamp 10 being attached to it. The traveling clamp 10 is adapted to grip the upper end of a single pipe section 20 or a pipeline 21 which will be described in more detail below.

The second block 52 has a substantially ring shaped body 52a with central opening 52b (see Fig. 3). The first block 51 has a body 51a with a diametrical dimension exceeding the diametrical dimension of the central opening 52b of the second block 52, such that the first block 52 cannot pass through the opening 52b of the second block 52. The second block 52 has a supporting surface 52c facing upwards and surrounding the central opening 52b for engagement with the first block 51 and for supporting it.

The first block 51 and the second block 52 can be coupled together. In the coupled state, which is shown in Fig. 2, the first block 51 engages the supporting surface 52c. In the coupled state the first block 51 and second block 52 form a unit and are able to support together the weight of a load held by the traveling clamp 10. This load can be the load of a pipeline hanging off which can amount up to 1000 tons. The unit, or better the traveling block unit, formed by the coupled first block 51 and second block 52 can travel along the tower 3 by operation of the winch 9.

The structure of the traveling block 5 is such that the first block 51 and the second block 52 can be separated. Thereto the second block 52 can be locked to a lower part of the tower 3 by means of suitable locking means, preferably locking pins 13. The locking pins 13 can be arranged on the second block 52 such that they upon a suitable control signal move towards an extended position and extend into locking holes provided in the tower 3. It is also possible to provide the tower 3 with the pins 13, which upon a suitable control signal move towards an extended position and extend into locking holes provided in the second block 52.

Locking of components with locking pins and locking holes is a generally known locking mechanism. It is to be understood that in the above by locking means not only the preferred locking pins and locking holes are meant, but also any other suitable locking mechanism are meant like the ones mentioned here, such as e.g. bolt/nut combinations, cylinders, clamps etc.

When the second block 52 is locked to the tower 3, the first block 51 can travel along the tower 3 while the second block 52 remains stationary with respect to the tower 3.

The pipelaying system is furthermore provided with a pipe connecting station, more in particular a pipe welding station 14 for welding the lowermost end of a pipe section 20 to an uppermost end of a previously launched pipeline 21. In addition the pipe laying system has a line up tool 16 for linig up the lowermost end of a pipe section 20 with the uppermost end of the pipe line 21 such that they can be welded together in the welding station 14. Also, the pipelaying system has a static clamp 15, in the art also know as a hang off clamp for gripping an upper end of the pipeline 21 and which is adapted to support the load of the pipeline 21. These components will become more apparent in the following description of a pipe laying method.

In Fig. 2 is shown a first state wherein the first block 51 and second block 52 are coupled and the traveling clamp 10 is holding the uppermost end of the pipeline 21 and supporting the load of the launched pipeline 21. Then the static clamp 15 will grip the upper end of the pipeline 21 and take over the load of the pipeline 21, after which the traveling clamp 10 can be released from the pipeline 21.

Next, the second block 52 can be coupled to the tower 3 by means of the locking pins 13. As is illustrated in Fig. 3, this locked state of the second block 52 allows the first block 51 to be hoisted up by operating the winch 9 while the second block 52 is retained by the locking pins 13 at its lowermost position on the tower 3.

At the moment that the first block 51 has arrived at its uppermost position at the tower 3 a new pipe section 20 is delivered to the tower 3 by means of suitable pipe delivering means. This new pipe section 20 is then gripped at its upper end by means of the traveling clamp 10 as is shown in Fig. 4.

The pipe section 20 can be lowered over such a distance that it can be gripped by the line up tool 16, after which the traveling clamp 10 can be released from the pipe section 21. This state is shown in Fig. 5. Next the pipe section 20 can be lined up with the pipeline 21 hanging off the static clamp 15 before their respective ends are welded together in the welding station 14.

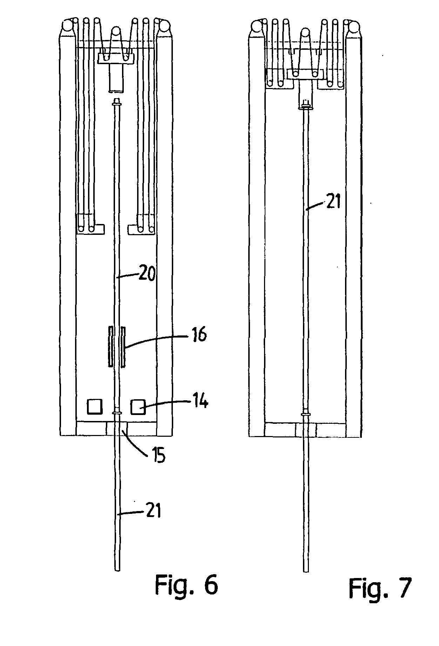

As is shown in Fig. 6, during the welding operation the locking pins 13 are released and the second block 52 is hoisted towards its uppermost position by operation of the winch 9. Preferably the system is designed such that hoisting the second block 52 to its uppermost position takes not more than the time necessary to weld the pipe section 20 and the pipeline 21 together. In such a way the intermediate time, during which the hoisting system is not necessary to carry a load, is used efficiently to join the first block 51 and second block 52.

In Fig. 7 is shown the state in which the second block 52 has arrived at its uppermost position on the tower 3 and is joined together with the first block. In this state the traveling clamp 10 grips the upper end of the pipeline 21. Because the unit 5 formed by the first block 51 and second block 52 is able to support the load of the pipeline 21, the static clamp 15 is released from the pipeline 21 and the pipeline 21 is lowered by operating the winch 9 until the state depicted in Fig. 2 is reached. This cycle is repeated to lay the pipeline 21.

In this example the first block 51 has two cable pulleys 6 and the second block 52 has four cable pulleys 7. As a result four cable parts 8a-8d extend between the top side 3a of the tower 3 and the first block 51, and eight cable parts 8e-8i extend between the top side 3a of the tower 3 and the second block 52 (see Fig. 3). This implies that in principle the first block 51 can be hoisted up in one third of the time that would be necessary if a non-splittable traveling block with twelve cable parts would be applied. This means that with the particular hoisting system shown in the figures the traveling clamp 10 is available at the top side 3a of the tower 3 much quicker for gripping a light load, i.e. a single pipe section 20. The intermediate time necessary to connect the pipe section 20 to the pipeline 21 is efficiently used to move the second block 52 upwards to bring the hoisting system to its full supporting capacity which is necessary to lower the pipeline 21.

With the present pipe laying system a considerable amount of time can be gained. This leads to a considerable reduction of the overall time of use of pipe laying equipment and thus in pipe laying costs.

It is to be understood that the invention is not limited to the particular embodiment illustrated in the figures. The invention can be performed and practiced in various ways. The invention can thus be applied with other pipe laying methods with a more inclined launch direction than the one illustrated in the above, even almost horizontal like S-lay. Also the application of the hoisting system is not limited to a pipe laying method, but could also be applied for other operations, e.g. offshore drilling.

In the embodiment of the pipe laying system shown in Figs. 1-7 the first block 51 cannot pass through the central opening in the second block 52. A traveling block structure is however envisaged wherein the first block and second block can be coupled in another manner, e.g. by locking pins or the like, wherein the first block can pass the second block from above or below.

## Claims

1. A marine pipe laying system for laying of an offshore pipeline, the system comprising:
a) a main supporting structure (1);
b) a pipe connecting station, wherein a pipe section (20) is connected to an uppermost end of a previously launched pipeline (21);
c) a static clamp (15) adapted for releasably securing the uppermost end of the previously launched pipeline (21), wherein the static clamp (15) is adapted to support the weight of the previously launched pipeline (21);
d) a hoisting device (2) comprising:
- a tower (3) with a tower top side (3a) provided with cable pulleys (4),
- a traveling block (5) which is displaceably attached to the tower (3) and which is provided with cable pulleys (6,7) and a traveling clamp (10) for holding a pipe section (20) to be connected to the pipeline (21) as well as for lowering the pipeline (21) after the pipe section (20) is connected to the pipeline (21),
- hoisting means comprising a hoisting cable (8) and a winch (9), the hoisting cable (8) being guided over the cable pulleys (4,6,7) on both the tower top side (3a) and the traveling block (5),
wherein the traveling block (5) is moveable with respect to the tower (3) by means of the hoisting means, and wherein the traveling block (5) comprises a first block (51) and a second block (52), both provided with cable pulleys (6,7), the traveling clamp (10) being attached to the first block (51), wherein the first block (51) and the second block (52) are adapted to be releasably coupled, in which coupled state they can travel along the tower (3) as a unit and are able to support the weight of the pipeline (21), and wherein the system comprises locking means for locking the second block (52) to the tower (3),
**characterized in that** the locking means are adapted to lock the second block (52) in a lowermost position at a lower side of the tower (3), such that the first block (51) can travel in an upward direction towards an uppermost position along the tower (3) while the second block (52) remains stationary with respect to the tower (3).

2. The system according to claim 1, wherein the locking means comprise one or more locking pins (13) moveable between a locked position into a locking hole and an unlocked position.

3. The system according to claim 2, wherein the one or more locking pins (13) are arranged on the second block (52) and the locking holes are arranged on the tower (3).

4. The system according to claim 2, wherein the one or more locking pins (13) are arranged on the tower (3) and the locking holes are arranged on the second block (52).

5. The system according to any of preceding claims, wherein the pipe connecting station comprises a welding station (14).

6. A method for laying of an offshore pipeline, wherein use is made of a system comprising:
a) a main supporting structure (1);
b) a pipe connecting station, wherein a pipe section (20) is connected to an uppermost end of a previously launched pipeline (21);
c) a static clamp (15) adapted for releasably securing the uppermost end of the previously launched pipeline (21), wherein the static clamp (15) is adapted to support the weight of the previously launched pipeline (21);
d) a hoisting device (2) comprising:
- a tower (3) with a tower top side (3a) provided with cable pulleys (4),
- a traveling block (5) which is displaceably attached to the tower (3) and which is provided with cable pulleys (6,7) and a traveling clamp (10) for holding a pipe section (20) to be connected to the pipeline (21) as well as for lowering the pipeline (21) after the pipe section (20) is connected to the pipeline (21),
- hoisting means comprising a hoisting cable (8) and a winch (9), the hoisting cable (8) being guided over the cable pulleys (6,7) on both the tower top side (30) and the traveling block (5),
wherein the traveling block (5) is moveable with respect to the tower (3) by means of the hoisting means, the traveling block (5) comprising a first block (51) and a second block (52), both provided with cable pulleys (6,7), the traveling clamp (10) being attached to the first block (51), wherein the first block (51) and the second block (52) are adapted to be releasably coupled so as to travel along the tower (3) as a unit, and wherein the system comprises locking means for locking the second block (52) to the tower (3), wherein the locking means are adapted to lock the second block (52) in a lowermost position at a lower side of the tower (3), such that the first block (51) can travel in an upward direction towards an uppermost position along the tower (3) while the second block (52) remains stationary with respect to the tower(3),
the method comprising the following steps:
i) holding the uppermost end of the pipeline (21) and supporting it with the traveling clamp (10) with the traveling block (5) in an uppermost position on the tower (3),
ii) lowering the pipeline (21) by lowering the coupled first block (51) and second block (52) by means of the hoisting means to a lowermost position on the tower (3),
iii) gripping the uppermost end of the pipeline (21) with the static clamp (15),
iv) releasing the traveling clamp (10) from the pipeline (21),
v) locking the second block (52) to the tower (3) by means of the locking means,
vi) hoisting the first block (51) from the lowermost position to the uppermost position by means of the hoisting means,
vii) gripping the uppermost end of a pipe section (20) to be connected to the pipeline (21) with the traveling clamp (10),
viii) lowering the first block (51) with the pipe section (20) by means of the hoisting means such that the lowermost end of the pipe section (20) can be gripped and lined up with the uppermost end of the pipeline (21) at the pipe connecting station,
ix) unlock the second block (52) from the tower (3),
x) connecting the lowermost end of the pipe section (20) to the uppermost end of the pipeline (21),
xi) hoist the second block (52) to the uppermost position while the pipe section (20) is connected to the pipeline (21),
xii) couple the first block (51) and second block (52),
xiii) grip the uppermost end of the pipe section (20) with the traveling clamp (10),
xiv) release the pipeline (21) from the pipe connecting station and from the static clamp (15), while holding the uppermost end of the pipeline (21) and supporting it with the traveling clamp (10) with the traveling block (5) in an uppermost position on the tower (3).

7. The method according to claim 6, wherein the second block (52) is moved from its lowermost position to its uppermost position on the tower (3) and then connected to the first block (51) within a time span that is equal or less than the time span for connecting the lowermost end of the pipe section (20) to the uppermost end of the pipeline (21).

8. The method according to claim 6 or 7, wherein the traveling clamp (10) is released from the pipe section (20) after the pipe section (20) is gripped at the pipe connecting station.

9. A hoisting device (2), preferably for a marine pipe laying system, comprising:
- a tower (3) with a tower top side (3a) provided with cable pulleys (4),
- a traveling block (5) which is displaceably attached to the tower (3) and which is provided with cable pulleys (6,7) and holding means for holding a load,
- hoisting means comprising a hoisting cable (8) and a winch (9), the hoisting cable (8) being guided over the cable pulleys (6,7) on both the tower top side (3a) and the traveling block (5), wherein the traveling block (5) is moveable with respect to the tower (3) by means of the hoisting means,
**characterized in that** the traveling block (5) comprises a first block (51) and a second block (52), both provided with cable pulleys (6,7), the first block (51) being provided with the holding means,
wherein the first block (51) and the second block (52) are adapted to be releasably coupled, in which coupled state of the first block (51) and second block (52) a higher load can be supported than in an unlocked state and in which coupled state of the first block (51) and second block (52) they can travel along the tower (3) as a unit, and
wherein the second block (52) is provided with locking means for locking it to a lower side of the tower (3), wherein the locking means are adapted to lock the second block (52) in a lowermost position at a lower side of the tower (3), such that the first block (51) can travel in an upward direction towards an uppermost position along the tower (3) while the second block (52) remains stationary with respect to the tower(3).

10. A method for hoisting a load with a hoisting device (2) according to claim 9, the method comprising an operation cycle in which:
a first load is gripped by the traveling clamp (10) with the traveling block (5) consisting of the coupled first block (51) and second block (52) in an uppermost position on the tower (3);
the first load is lowered by lowering the coupled together first block (51) and second block (52) by means of the hoisting means to a lowermost position on the tower (3) where the traveling clamp (10) is preferably released from the first load which is handed over to a load handling device;
wherein the second block (52) is locked to the tower (3) by means of the locking means, the first block (51) alone is hoisted from the lowermost position to the uppermost position by means of the hoisting means, after which the first block (51) is used for an intermediate operation after which the second block (52) is unlocked from the tower (3) and hoisted to the uppermost position where it is coupled to the first block (51).

11. A method for connecting a first object and a second object at a connecting station wherein use is made of a device according to claim 9, the method comprising the following steps:
i) holding the first object and supporting it with the traveling clamp (10) with the traveling block (5) in an uppermost position on the tower (3),
ii) lowering the first object by lowering the coupled first block (51) and second block (52) by means of the hoisting means to a lowermost position on the tower (3),
iii) gripping the first object with gripping means at the connecting station,
iv) locking the second block (51) to the tower (3) by means of the locking means,
v) hoisting the first block (51) from the lowermost position to the uppermost position by means of the hoisting means,
vi) gripping with the traveling clamp (10) the second object,
vii) lowering the first block (51) with the second object by means of the hoisting means such that the second object is delivered to the connecting station and gripped by its gripping means,
viii) releasing the traveling clamp (10) from the second object,
ix) unlock the second block (52) from the tower (3),
x) connecting the second object to the first object,
xi) hoist the second block (52) to the uppermost position while connecting the second object to the first object,
xii) couple the first block (51) and second block (52),
xiii) grip the connected first and second object with the traveling clamp (10),
xiv) release the connected first and second object from the connecting station, while holding them with the traveling clamp (10) with the traveling block (5) in an uppermost position on the tower (1).

12. The method according to claim 11, wherein the traveling clamp (10) is released from the second object after the second object has been gripped by the gripping means of the connecting station.

## Patentansprüche

1. Unterwasser-Rohrverlegesystem zum Verlegen einer Offshore-Rohrleitung, wobei das System umfasst:
a) eine Haupt-Tragestruktur (1);
b) eine Rohrverbindungsstation, in der ein Rohrabschnitt (20) mit einem obersten Ende einer bereits zu Wasser gebrachten Rohrleitung (21) verbunden wird;
c) eine feststehende Halterung (15), die zum lösbaren Befestigen des obersten Endes der bereits zu Wasser gebrachten Rohrleitung (21) eingerichtet ist, wobei die feststehende Halterung (15) so eingerichtet ist, dass sie das Gewicht der bereits zu Wasser gebrachten Rohrleitung (21) trägt;
d) eine Hebevorrichtung (2), die umfasst:
- einen Turm (3) mit einer Turm-Oberseite (3a), die mit Seilscheiben (4) versehen ist,
- einen Flaschenzugblock (5), der verschiebbar an dem Turm (3) angebracht ist und mit Seilscheiben (6, 7) sowie einer beweglichen Halterung (10) versehen ist, um einen mit der Rohrleitung (21) zu verbindenden Rohrabschnitt (20) zu halten und die Rohrleitung (21) abzusenken, nachdem der Rohrabschnitt (20) mit der Rohrleitung (21) verbunden ist,
- eine Hebeeinrichtung, die ein Hebeseil (8) und eine Winde (9) umfasst, wobei das Hebeseil (8) über die Seilscheiben (4, 6, 7) sowohl an der Turm-Oberseite (3a) als auch dem Flaschenzugblock (5) geführt wird;
wobei der Flaschenzugblock (5) mittels der Hebeeinrichtung in Bezug auf den Turm (3) bewegt werden kann, der Flaschenzugblock (5) einen ersten Block (51) und einen zweiten Block (52) umfasst, die beide mit Seilscheiben (6, 7) versehen sind, die bewegliche Halterung (10) an dem ersten Block (51) angebracht ist, der erste Block (51) sowie der zweite Block (52) so eingerichtet sind, dass sie lösbar gekoppelt werden, und sie sich in dem gekoppelten Zustand als eine Einheit an dem Turm (3) entlang bewegen und das Gewicht der Rohrleitung (21) tragen können, und das System eine Arretiereinrichtung zum Arretieren des zweiten Blocks (52) an dem Turm (3) umfasst,
**dadurch gekennzeichnet, dass**
die Arretiereinrichtung so eingerichtet ist, dass sie den zweiten Block (52) in einer untersten Position an einer Unterseite des Turms (3) so arretiert, dass sich der erste Block (51) in einer Aufwärtsrichtung auf eine oberste Position zu an dem Turm (3) entlang bewegen kann, während der zweite Block (52) in Bezug auf den Turm (3) stationär bleibt.

2. System nach Anspruch 1, wobei die Arretiereinrichtung einen oder mehrere Arretierbolzen (13) umfasst, der/die zwischen einer arretierten Position in einem Arretierblock und einer entarretierten Position bewegt werden kann/können.

3. System nach Anspruch 2, wobei der eine oder die mehreren Arretierbolzen (13) an dem zweiten Block (52) angeordnet ist/sind und die Arretierlöcher an dem Turm (3) angeordnet sind.

4. System nach Anspruch 2, wobei der eine oder die mehreren Arretierbolzen (13) an dem Turm (3) angeordnet ist/sind und die Arretierlöcher an dem zweiten Block (52) angeordnet sind.

5. System nach einem der vorangehenden Ansprüche, wobei die Rohrverbindungsstation eine Schweißstation (14) umfasst.

6. Verfahren zum Verlegen einer Offshore-Rohrleitung, bei dem ein System eingesetzt wird, das umfasst:
a) eine Haupt-Tragestruktur (1);
b) eine Rohrverbindungsstation, in der ein Rohrabschnitt (20) mit einem obersten Ende einer bereits zu Wasser gebrachten Rohrleitung (21) verbunden wird;
c) eine feststehende Halterung (15), die zum lösbaren Befestigen des obersten Endes der bereits zu Wasser gebrachten Rohrleitung (21) eingerichtet ist, wobei die feststehende Halterung (15) so eingerichtet ist, dass sie das Gewicht der bereits zu Wasser gebrachten Rohrleitung (21) trägt;
d) eine Hebevorrichtung (2), die umfasst:
- einen Turm (3) mit einer Turm-Oberseite (3a), die mit Seilscheiben (4) versehen ist,
- einen Flaschenzugblock (5), der verschiebbar an dem Turm (3) angebracht ist und mit Seilscheiben (6, 7) sowie einer beweglichen Halterung (10) versehen ist, um einen mit der Rohrleitung (21) zu verbindenden Rohrabschnitt (20) zu halten und die Rohrleitung (21) abzusenken, nachdem der Rohrabschnitt (20) mit der Rohrleitung (21) verbunden ist,
- eine Hebeeinrichtung, die ein Hebeseil (8) und eine Winde (9) umfasst, wobei das Hebeseil (8) über die Seilscheiben (6, 7) sowohl an der Turm-Oberseite (3a) als auch dem Flaschenzugblock (5) geführt wird,
wobei der Flaschenzugblock (5) in Bezug auf den Turm (3) mittels der Hebeeinrichtung bewegt werden kann, der Flaschenzugblock (5) einen ersten Block (5) und einen zweiten Block (8) umfasst, die beide mit Seilscheiben (6, 7) versehen sind, die bewegliche Halterung (10) an dem ersten Block angebracht ist, der erste Block (51) sowie der zweite Block (52) so eingerichtet sind, dass sie lösbar gekoppelt werden und sich als eine Einheit an dem Turm (3) entlang bewegen, das System eine Arretiereinrichtung zum Arretieren des zweiten Blocks (52) an dem Turm (3) umfasst und die Arretiereinrichtung so eingerichtet ist, dass sie den zweiten Block (52) in einer untersten Position an einer Unterseite des Turms (3) so arretiert, dass sich der erste Block (51) in einer Aufwärtsrichtung auf eine oberste Position zu an dem Turm (3) entlang bewegen kann, während der zweite Block (52) in Bezug auf den Turm (3) stationär bleibt,
wobei das Verfahren die folgenden Schritte umfasst:
I) Halten des obersten Endes der Rohrleitung (21) und Tragen desselben mit der beweglichen Halterung (10), wobei sich der Flaschenzugblock (5) an einer obersten Position an dem Turm (3) befindet,
II) Absenken der Rohrleitung (21) durch Absenken des ersten Blocks (51) und des zweiten Blocks (52), die gekoppelt sind, mittels der Hebeeinrichtung an eine unterste Position an dem Turm (3),
III) Ergreifen des obersten Endes der Rohrleitung (21) mit der feststehenden Halterung (15),
IV) Lösen der beweglichen Halterung (10) von der Rohrleitung (21),
V) Arretieren des zweiten Blocks (52) an dem Turm (3) mittels der Arretiereinrichtung,
VI) Heben des ersten Blocks (51) von der untersten Position an die oberste Position mittels der Hebeeinrichtung,
VII) Ergreifen des obersten Endes eines Rohrabschnitts (20), der mit der Rohrleitung (21) verbunden werden soll, mit der beweglichen Halterung (10),
VIII) Absenken des ersten Blocks (51) mit dem Rohrabschnitt (20) mittels der Hebeeinrichtung, so dass das unterste Ende des Rohrabschnitts (20) ergriffen und auf das oberste Ende der Rohrleitung (21) an der Rohrverbindungsstation ausgerichtet werden kann,
IX) Entarretieren des zweiten Blocks (51) von dem Turm (3),
X) Verbinden des untersten Endes des Rohrabschnitts (20) mit dem obersten Ende der Rohrleitung (21),
XI) Heben des zweiten Blocks (52) an die oberste Position, wobei der Rohrabschnitt (20) dabei mit der Rohrleitung (21) verbunden ist,
XII) Koppeln des ersten Blocks (51) und des zweiten Blocks (52),
XIII) Ergreifen des obersten Endes des Rohrabschnitts (20) mit der beweglichen Halterung (10),
XIV) Lösen der Rohrleitung (21) von der Rohrverbindungsstation und der feststehenden Halterung (15), wobei das oberste Ende der Rohrleitung (21) dabei gehalten und mit der beweglichen Halterung (10) getragen wird, und sich der Flaschenzugblock (5) an einer obersten Position an dem Turm (3) befindet.

7. Verfahren nach Anspruch 6, wobei der zweite Block (52) von seiner untersten Position an seine oberste Position an dem Turm (3) bewegt wird und dann mit dem ersten Block (51) innerhalb einer Zeitspanne verbunden wird, die genauso lang ist wie oder kürzer als die Zeitspanne zum Verbinden des untersten Endes des Rohrabschnitts (20) mit dem obersten Ende der Rohrleitung (21).

8. Verfahren nach Anspruch 6 oder 7, wobei die bewegliche Halterung (10) von dem Rohrabschnitt (20) gelöst wird, nachdem der Rohrabschnitt (20) an der Rohrverbindungsstation ergriffen ist.

9. Hebevorrichtung (2), vorzugsweise für ein Unterwasserrohr-Verlegungssystem, die umfasst:
- einen Turm (3) mit einer Turm-Oberseite (3a), die mit Seilscheiben (4) versehen ist,
- einen Flaschenzugblock (5), der verschiebbar an dem Turm (3) angebracht ist und mit Seilscheiben (6, 7) sowie einer Halteeinrichtung zum Halten einer Last versehen ist,
- eine Hebeeinrichtung, die ein Hebeseil (8) und eine Winde (9) umfasst, wobei das Hebekabel (8) über die Seilscheiben (6, 7) sowohl an der Turm-Oberseite (3a) als auch dem Flaschenzug-Block (5) geführt wird und der Flaschenzug-Block (5) mittels der Hebeeinrichtung in Bezug auf den Turm (3) bewegt werden kann,
**dadurch gekennzeichnet, dass** der Flaschenzug-Block (5) einen ersten Block (51) und einen zweiten Block (52) umfasst, die beide mit Seilscheiben (6, 7) versehen sind, wobei der erste Block (51) mit der Halteeinrichtung versehen ist,
der erste Block (51) und der zweite Block (52) so eingerichtet sind, dass sie lösbar gekoppelt werden und in dem gekoppelten Zustand des ersten Blocks (51) und des zweiten Blocks (52) eine größere Last getragen werden kann als in einem entarretierten Zustand, und sich in dem gekoppelten Zustand des ersten Blocks (51) und des zweiten Blocks (52) diese als eine Einheit an dem Turm (3) entlang bewegen können, und
der zweite Block (52) mit einer Arretiereinrichtung zum Arretieren desselben an einer unteren Seite des Turms (3) versehen ist, und die Arretiereinrichtung so eingerichtet ist, dass sie den zweiten Block (52) in einer untersten Position an einer Unterseite des Turms (3) so arretiert, dass sich der erste Block (51) in einer Aufwärtsrichtung auf eine oberste Position an dem Turm zu (3) entlang bewegen kann, während der zweite Block (52) in Bezug auf den Turm (3) stationär bleibt.

10. Verfahren zum Heben einer Last mit einer Hebevorrichtung (2) nach Anspruch 9, wobei das Verfahren einen Funktionszyklus umfasst, in dem:
eine erste Last mit der beweglichen Halterung (10) ergriffen wird, wobei sich der Flaschenzug-Block (5), der aus dem ersten Block (51) und dem zweiten Block (52) besteht, die gekoppelt sind, in einer obersten Position an dem Turm (3) befindet;
die erste Last abgesenkt wird, indem der erste Block (51) und der zweite Block (52), die miteinander gekoppelt sind, mittels der Hebeeinrichtung (8) an eine unterste Position an dem Turm (3) abgesenkt werden, an der die bewegliche Halterung vorzugsweise von der ersten Last gelöst wird, die an eine Last-Handhabungsvorrichtung übergeben wird;
wobei der zweite Block (52) mittels der Arretiereinrichtung an dem Turm (3) arretiert wird, der erste Block (51) mittels der Hebeeinrichtung allein von der untersten Position an die oberste Position gehoben wird, anschließend der erste Block (51) für eine Zwischenfunktion verwendet wird und danach der zweite Block (52) von dem Turm (3) entarretiert wird und an die oberste Position gehoben wird, an der er mit dem ersten Block (51) gekoppelt wird.

11. Verfahren zum Verbinden eines ersten Objektes und eines zweiten Objektes an einer Verbindungsstation, bei dem eine Vorrichtung nach Anspruch 9 eingesetzt wird, wobei das Verfahren die folgenden Schritte umfasst:
I) Halten des ersten Objektes und Tragen desselben mit der beweglichen Halterung (10), wobei sich der Flaschenzug-Block (5) an einer obersten Position an dem Turm (3) befindet,
II) Absenken des ersten Objektes durch Absenken des ersten Blocks (51) und des zweiten Blocks (52), die gekoppelt sind, mittels der Hebeeinrichtung an eine unterste Position an dem Turm (3),
III) Ergreifen des ersten Objektes mit einer Greifeinrichtung an der Verbindungsstation,
IV) Arretieren des zweiten Blocks (52) an dem Turm (3) mittels der Arretiereinrichtung,
V) Heben des ersten Blocks (51) von der untersten Position an die oberste Position mittels der Hebeeinrichtung,
VI) Ergreifen des zweiten Objektes mit der beweglichen Halterung (10),
VII) Absenken des ersten Blocks (51) mit dem zweiten Objekt mittels der Hebeeinrichtung, so dass das zweite Objekt an die Verbindungsstation abgegeben wird und mit ihrer Greifeinrichtung ergriffen wird,
VIII) Lösen der beweglichen Halterung (10) von dem zweiten Objekt,
IX) Entarretieren des zweiten Blocks (52) von dem Turm (3),
X) Verbinden des zweiten Objektes mit dem ersten Objekt,
XI) Heben des ersten Blocks (52) an die oberste Position, während das zweite Objekt mit dem ersten Objekt verbunden wird,
XII) Koppeln des ersten Blocks (51) und des zweiten Blocks (52),
XIII) Ergreifen des ersten und zweiten Objektes, die verbunden sind, mit der beweglichen Halterung (10),
XIV) Lösen des ersten und zweiten Objektes, die verbunden sind, von der Verbindungsstation, wobei sie dabei mit der beweglichen Halterung (10) gehalten werden und sich der Flaschenzug-Block (5) in einer obersten Position an dem Turm (3) befindet.

12. Verfahren nach Anspruch 11, wobei die bewegliche Halterung (10) von dem zweiten Objekt gelöst wird, nachdem das zweite Objekt mit der Greifeinrichtung der Verbindungsstation ergriffen worden ist.

## Revendications

1. Système de pose de tubes sous-marins destiné à la pose d'un pipeline sous-marin, le système comprenant :
a) une structure de support principale (1) ;
b) un poste de raccordement de tube, dans lequel une section de tube (20) est raccordée à une extrémité la plus supérieure d'un pipeline déjà mis à l'eau (21) ;
c) une pince fixe (15) adaptée pour fixer de manière amovible l'extrémité la plus supérieure du pipeline déjà mis à l'eau (21), dans lequel la pince fixe (15) est adaptée pour supporter le poids du pipeline déjà mis à l'eau (21) ;
d) un dispositif de levage (2) comprenant :
- une tour (3) avec un côté supérieur de tour (3a) muni de poulies à câble (4),
- un moufle mobile (5) qui est fixé de manière mobile à la tour (3) et qui est muni de poulies à câble (6, 7) et d'une pince mobile (10) servant tant à retenir une section de tube (20) devant être raccordée au pipeline (21) qu'à abaisser le pipeline (21) suite au raccordement de la section de tube (20) au pipeline (21),
- des moyens de levage comprenant un câble de levage (8) et un treuil (9), le câble de levage (8) étant guidé sur les poulies à câble (4, 6, 7) à la fois sur le côté supérieur de la tour (3a) et sur le moufle mobile (5),
dans lequel le moufle mobile (5) est mobile par rapport à la tour (3) par l'intermédiaire des moyens de levage, et dans lequel le moufle mobile (5) comprend un premier moufle (51) et un second moufle (52), tous deux munis de poulies à câble (6, 7), la pince mobile (10) étant fixée au premier moufle (51), dans lequel le premier moufle (51) et le second moufle (52) sont adaptés pour être couplés de manière amovible, état couplé dans lequel ils peuvent se déplacer le long de la tour (3) d'un seul tenant et sont aptes à supporter le poids du pipeline (21), et dans lequel le système comprend des moyens de blocage pour bloquer le second moufle (52) sur la tour (3),
**caractérisé en ce que** les moyens de blocage sont adaptés pour bloquer le second moufle (52) dans une position la plus inférieure au niveau d'un côté inférieur de la tour (3), de telle sorte que le premier moufle (51) puisse se déplacer dans un sens ascendant vers une position la plus supérieure le long de la tour (3) tandis que le second moufle (52) reste fixe par rapport à la tour (3).

2. Système selon la revendication 1, dans lequel les moyens de blocage comprennent une ou plusieurs goupilles d'arrêt (13) mobiles entre une position bloquée dans un orifice de blocage et une position non bloquée.

3. Système selon la revendication 2, dans lequel l'une ou les plusieurs goupille(s) d'arrêt (13) est/sont disposée(s) sur le second moufle (52) et les orifices de blocage sont disposés sur la tour (3).

4. Système selon la revendication 2, dans lequel l'une ou les plusieurs goupille(s) d'arrêt (13) est/sont disposée(s) sur la tour (3) et les orifices de blocage sont disposés sur le second moufle (52).

5. Système selon l'une quelconque des revendications précédentes, dans lequel le poste de raccordement de tube comprend un poste de soudage (14).

6. Procédé de pose d'un pipeline sous-marin, dans lequel il est fait usage d'un système comprenant :
a) une structure de support principale (1) ;
b) un poste de raccordement de tube, dans lequel une section de tube (20) est raccordée à une extrémité la plus supérieure d'un pipeline déjà mis à l'eau (21) ;
c) une pince fixe (15) adaptée pour fixer de manière amovible l'extrémité la plus supérieure du pipeline déjà mis à l'eau (21), dans lequel la pince fixe (15) est adaptée pour supporter le poids du pipeline déjà mis à l'eau (21) ;
d) un dispositif de levage (2) comprenant :
- une tour (3) avec un côté supérieur de tour (3a) muni de poulies à câble (4),
- un moufle mobile (5) qui est fixé de manière mobile à la tour (3) et qui est muni de poulies à câble (6, 7) et d'une pince mobile (10) servant tant à retenir une section de tube (20) devant être raccordée au pipeline (21) qu'à abaisser le pipeline (21) suite au raccordement de la section de tube (20) au pipeline (21),
- des moyens de levage comprenant un câble de levage (8) et un treuil (9), le câble de levage (8) étant guidé sur les poulies à câble (6, 7) à la fois sur le côté supérieur de la tour (3a) et sur le moufle mobile (5),
dans lequel le moufle mobile (5) est mobile par rapport à la tour (3) par l'intermédiaire des moyens de levage, le moufle mobile (5) comprenant un premier moufle (51) et un second moufle (52), tous deux munis de poulies à câble (6, 7), la pince mobile (10) étant fixée au premier moufle (51), dans lequel le premier moufle (51) et le second moufle (52) sont adaptés pour être couplés de manière amovible, afin de se déplacer le long de la tour (3) d'un seul tenant, et dans lequel le système comprend des moyens de blocage pour bloquer le second moufle (52) sur la tour (3),
dans lequel les moyens de blocage sont adaptés pour bloquer le second moufle (52) dans une position la plus inférieure au niveau d'un côté inférieur de la tour (3), de telle sorte que le premier moufle (51) puisse se déplacer dans un sens ascendant vers une position la plus supérieure le long de la tour (3) tandis que le second moufle (52) reste fixe par rapport à la tour (3),
le procédé comprenant les étapes suivantes :
i) retenir l'extrémité la plus supérieure du pipeline (21) et la supporter avec la pince mobile (10), le moufle mobile (5) étant dans une position la plus supérieure sur la tour (3),
ii) abaisser le pipeline (21) en abaissant le premier moufle (51) et le second moufle (52) couplés, par l'intermédiaire des moyens de levage, à une position la plus inférieure sur la tour (3),
iii) agripper l'extrémité la plus supérieure du pipeline (21) au moyen de la pince fixe (15),
iv) dégager la pince mobile (10) du pipeline (21),
v) bloquer le second moufle (52) sur la tour (3) par l'intermédiaire des moyens de blocage,
vi) élever le premier moufle (51) de la position la plus inférieure à la position la plus supérieure par l'intermédiaire des moyens de levage,
vii) agripper l'extrémité la plus supérieure d'une section de tube (20) à raccorder au pipeline (21) au moyen de la pince mobile (10),
viii) abaisser le premier moufle (51) avec la section de tube (20) par l'intermédiaire des moyens de levage de telle sorte que l'extrémité la plus inférieure de la section de tube (20) puisse être agrippée et alignée à l'extrémité la plus supérieure du pipeline (21) au niveau du poste de raccordement de tube,
ix) débloquer le second moufle (52) de la tour (3),
x) raccorder l'extrémité la plus inférieure de la section de tube (20) à l'extrémité la plus supérieure du pipeline (21),
xi) élever le second moufle (52) à la position la plus supérieure tandis que la section de tube (20) est raccordée au pipeline (21),
xii) coupler le premier moufle (51) et le second moufle (52),
xiii) agripper l'extrémité la plus supérieure de la section de tube (20) avec la pince mobile (10),
xiv) dégager le pipeline (21) du poste de raccordement de tube et de la pince fixe (15) tout en retenant l'extrémité la plus supérieure du pipeline (21) et en la supportant au moyen de la pince mobile (10) avec le moufle mobile (5) dans une position la plus supérieure sur la tour (3).

7. Procédé selon la revendication 6, dans lequel le second moufle (52) est déplacé de sa position la plus inférieure à sa position la plus supérieure sur la tour (3) puis raccordé au premier moufle (51) pendant un laps de temps qui est inférieur ou égal au laps de temps nécessaire pour raccorder l'extrémité la plus inférieure de la section de tube (20) à l'extrémité la plus supérieure du pipeline (21).

8. Procédé selon la revendication 6 ou 7, dans lequel la pince mobile (10) est dégagée de la section de tube (20) après que la section de tube (20) a été agrippée au niveau du poste de raccordement de tube.

9. Dispositif de levage (2), de préférence pour un système de pose de tubes sous-marins, comprenant :
- une tour (3) avec un côté supérieur de tour (3a) muni de poulies à câble (4),
- un moufle mobile (5) qui est fixé de manière mobile à la tour (3) et qui est muni de poulies à câble (6, 7) et de moyens de maintien pour retenir une charge,
- des moyens de levage comprenant un câble de levage (8) et un treuil (9), le câble de levage (8) étant guidé sur les poulies à câble (6, 7) à la fois sur le côté supérieur de la tour (3a) et sur le moufle mobile (5), dans lequel le moufle mobile (5) est mobile par rapport à la tour (3) par l'intermédiaire des moyens de levage,
**caractérisé en ce que** le moufle mobile (5) comprend un premier moufle (51) et un second moufle (52), tous deux munis de poulies à câble (6, 7), le premier moufle (51) étant muni des moyens de maintien,
dans lequel le premier moufle (51) et le second moufle (52) sont adaptés pour être couplés de manière amovible, état couplé du premier moufle (51) et du second moufle (52) dans lequel une charge plus grande peut être supportée par rapport à un état non couplé, état couplé du premier moufle (51) et du second moufle (52) dans lequel ces derniers peuvent se déplacer d'un seul tenant le long de la tour (3), et
dans lequel le second moufle (52) est muni de moyens de blocage afin de bloquer celui-ci sur un côté inférieur de la tour (3),
dans lequel les moyens de blocage sont adaptés pour bloquer le second moufle (52) dans une position la plus inférieure au niveau d'un côté inférieur de la tour (3), de telle sorte que le premier moufle (51) puisse se déplacer dans un sens ascendant vers une position la plus supérieure le long de la tour (3) tandis que le second moufle (52) reste fixe par rapport à la tour (3).

10. Procédé de levage d'une charge avec un dispositif de levage (2) selon la revendication 9, le procédé comprenant un cycle de fonctionnement dans lequel :
une première charge est agrippée par la pince mobile (10), le moufle mobile (5) comprenant le premier moufle (51) et le second moufle (52) couplés dans une position la plus supérieure sur la tour (3) ;
la première charge est abaissée en abaissant le premier moufle (51) et le second moufle (52) couplés, par l'intermédiaire des moyens de levage, à une position la plus inférieure sur la tour (3), où la pince mobile (10) est de préférence dégagée de la première charge qui est transmise à un dispositif de préhension ;
dans lequel le second moufle (52) est bloqué sur la tour (3) par l'intermédiaire des moyens de blocage, seul le premier moufle (51) étant élevé de la positon la plus inférieure à la position la plus supérieure par l'intermédiaire des moyens de levage, suite à quoi le premier moufle (51) est utilisé pour une opération intermédiaire après laquelle le second moufle (52) est débloqué de la tour (3) et élevé à la position la plus supérieure où il est couplé au premier moufle (51).

11. Procédé de raccordement d'un premier objet et d'un second objet au niveau d'un poste de raccordement, dans lequel il est fait usage d'un dispositif selon la revendication 9, le procédé comprenant les étapes suivantes :
i) retenir le premier objet et le supporter au moyen de la pince mobile (10), tandis que le moufle mobile (5) est dans une position la plus supérieure sur la tour (3),
ii) abaisser le premier objet en abaissant le premier moufle (51) et le second moufle (52) couplés, par l'intermédiaire des moyens de levage, à une position la plus inférieure sur la tour (3),
iii) agripper le premier objet avec des moyens de saisie au niveau du poste de raccordement,
iv) bloquer le second moufle (52) sur la tour (3) par l'intermédiaire des moyens de blocage,
v) élever le premier moufle (51) depuis la position la plus inférieure à la position la plus supérieure par l'intermédiaire des moyens de levage,
vi) agripper le second objet avec la pince mobile (10),
vii) abaisser le premier moufle (51) avec le second objet par l'intermédiaire des moyens de levage, de manière à ce que le second objet soit amené au poste de raccordement et agrippé par ses moyens de saisie,
viii) dégager la pince mobile (10) du second objet,
ix) débloquer le second moufle (52) de la tour (3),
x) raccorder le second objet au premier objet,
xi) élever le second moufle (52) à la position la plus supérieure tout en raccordant le second objet au premier objet,
xii) coupler le premier moufle (51) et le second moufle (52),
xiii) agripper les premier et second objets raccordés au moyen de la pince mobile (10),
xiv) libérer les premier et second objets raccordés du poste de raccordement, tout en les retenant au moyen de la pince mobile (10), le moufle mobile (5) étant dans une position la plus supérieure sur la tour (3).

12. Procédé selon la revendication 11, dans lequel la pince mobile (10) est dégagée du second objet après que le second objet a été agrippé par les moyens de saisie du poste de raccordement.
